# EUROPEAN PATENT APPLICATION

(11) **EP 1 585 128 A1**
(43) Date of publication of application: **12.10.2005**
(21) Application number: 03811535.8
(22) Date of filing: 20.11.2003
(51) Int. Cl.: G11B 20/10, G11B 27/00, H04N 5/92

(54) **INTEGRATED VIDEO DATA FILE INTEGRATION DEVICE AND METHOD AND INTEGRATED VIDEO DATA FILE REPRODUCTION DEVICE AND METHOD**

(30) Priority: 20.11.2002 JP 2002336430
(71) Applicant: MATSUSHITA ELECTRIC INDUSTRIAL CO., LTD., Kadoma-shi, Osaka 571-8501 (JP)
(72) Inventor: KUSAKA, Hiroya, Hyogo 666-0034 (JP); DATE, Toshihiko, Nara-shi, Nara 631-0801 (JP)
(74) Representative: Eisenführ, Speiser & Partner
(86) International application number: PCT/JP2003/014806
(87) International publication number: WO 2004/047098

(57) **Abstract**

Directory file structure information in units of recording media before consolidation is converted into reproduction control information in a data format of a management information file after consolidation and is recorded in the management information file after consolidation, enabling view and edit of the video materials, and further enabling to rewrite them to other media according to the management information before consolidation.

## Description

### TECHNICAL FIELD

The present invention relates to a consolidating apparatus for a video data file formed by consolidating plural video data files and a method therefor, and a reproducing apparatus for the consolidated video data file and a method therefor.

### BACKGROUND ART

As a conventional consolidation system for video data files, for example, there is a system disclosed in Patent Document 1 (Japanese Patent Laid-open publication No. 2001-266544). In this conventional example, when plural pieces of video data are consolidated and stored in a different recording medium, a folder structure is created in the recording medium on the side where the consolidation and recording are performed based on scenario information of the video data before conversion, and link information representing arbitrary parts of the video data after conversion is stored as files in the respective folders, and further, format conversion of the video data is performed based on the link information, so that the resultant data is recorded.

In the above conventional example, the recording medium before conversion is a tape medium. However, by using a stationary home video recording device equipped with a mass storage disk medium such as a hard disk or an optical disk, a large video data file can be held in the disk medium easily in ordinary households. Since these recording media have rapid data access capabilities compared to the conventional tape medium, they have advantages in functions of finding the beginning of the video scenes and searching, and further, user-friendliness is improved by a new function such as simultaneous recording and reproduction, and the device is expected to become increasingly widespread in the future.

On the other hand, also in recording media for a portable video recording device such as a digital camera and home video camcorder, a device equipped with a semiconductor memory, an optical disk, a hard disk, etc. is put into practical use.

Since a volume of data of a recording medium for a portable device is generally smaller compared to a recording medium for a stationary device, it is conceivable that the video materials recorded by such a portable device consolidated into a mass storage recording medium for the stationary device in the home so that an application mode of viewing them in the home becomes widespread. Note that, when the video data is recorded in the recording devices, data formats and directory file structures are often different according to recording media and recording devices, and therefore in the case where the data is consolidated from the portable device to the stationary device as described above, the data format and directory file structure are needed to be converted.

Accordingly, in the first improved example of the conventional consolidation system of video data files, for example, the video data file and management information file of the portable device are recorded in a directory file structure which includes one management information directory and plural video data directories. In the management information directory, the first management information file and the second management information file are recorded.

Further, in the video data directories, video data files are recorded as programs, and as operation units within the recording media in the data format for the portable device, a user can perform reproduction, edit, etc. in units of programs.

In the directory file structure of the stationary device in the first improved example, the video data files and management information file are recorded, and both the management information file and video data file are recorded in the data format for the stationary device, and the management information and the video data are put together into single data file, respectively, and are held in the same directory.

Therefore, in the case where the video data recorded in the directory file structure of the portable device and the management information data associated therewith are converted to the directory file structure for the stationary device, plural video data files and management information files for the portable device are converted to have data formats for the stationary device and are consolidated into single files, respectively.

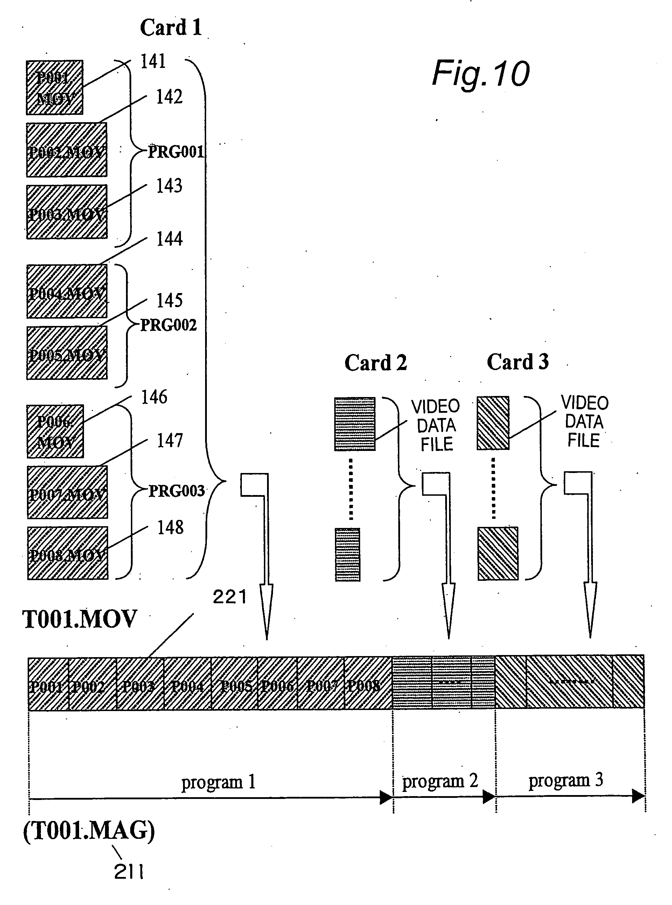

Fig. 10 is a conceptual diagram when plural video data files 141 to 148 for the portable device are consolidated into a video data file 221 for the stationary device in the first improved embodiment. In Fig. 10, eight video data files P001.MOV to P008.MOV on a recording medium "Card 1" for the portable device are consolidated into the video data file 221 (T001.MOV) on a recording medium of the stationary device. Furthermore, plural video data files on other recording media "Card 2" and "Card 3" for the portable device are continuously added to and consolidated into the video data file 221 on a recording medium of the stationary device.

In addition, in Fig. 10, programs (program 1 to program 3) defined in the data format of the management information file 211 for the stationary device are adapted to the video data 141 to 148 in units of recording media for the portable device. By thus defining the programs, in the stationary device, materials can be viewed and edited in units of recording media before consolidation, and further can be written in another medium.

### DISCLOSURE OF INVENTION

However, the conventional example disclosed in Patent Document 1 is a technology for consolidating the plural pieces of video data of a tape medium into a disk medium having a directory file structure, and a random access method based on the scenario information to the video data before consolidation sequentially recorded in the tape medium is not considered. On this account, in the devices before and after consolidation, it is impossible for the user to view the video data by the same reproducing operation.

On the contrary, in the first improved example shown in Fig. 10. both of the recording media before and after consolidation have directory file structures and random access can be performed to any video data. Therefore, in the devices before and after consolidation, it is possible for the user to view the video data by the same reproducing operation.

However, at the time of consolidation shown in Fig. 10, video data files on the plural recording media (Card 1 to Card 3) for the portable device are consolidated into single video data file 221, and therefore, structure information (PRG001 to PRG003) of the program directory within the recording medium before consolidation is deleted. Therefore, for the user, a trouble such as medium exchange can be saved because the video materials of the plural recording media recorded by the portable device are put together in the single mass storage medium, however, it becomes very difficult to view and edit the materials in units of programs before consolidation, which have been semantically defined at the time of recording.

Furthermore, when the data is rewritten back from the medium for the stationary device into the medium for the portable device, the structure information of the program directory is also deleted, and therefore, the same directory file structure as that before consolidation can not be realized.

Accordingly, as the second improved example, a method is conceivable for recording and storing the structure information of the program directory to be deleted by the consolidation, using another file in a unique data format. Thereby, it becomes possible that, the video data is reproduced from the video data consolidated and stored in the mass storage medium, according to the structure information of the program directory before consolidation. However, by this method, since the data format of the data stored in another file is unique, a trouble possibly occurs in compatibility between devices, and there is a problem of lack of general versatility.

The invention is achieved to solve the problems with the conventional consolidation system of video data files, and has an object to provide a consolidation system of video data files by which no problem in compatibility between devices for reproducing video data after consolidation occurs when the video data and management information on the plural recording media are consolidated into another recording medium, and enabling view and edit of video materials according to the management information before consolidation, and further writing them to another medium in the device for reproducing the consolidated video data.

In order to achieve the above described purposes, a video data file consolidating apparatus of the invention is a video data file consolidating apparatus for converting and consolidating video data files and management information data files associated therewith before consolidation which are recorded in a data format of a directory file structure before consolidation in a first recording medium, into a data format of a different directory file structure for a second recording medium, and the apparatus comprises conversion processing means for converting the management information files before consolidation and video data files before consolidation to the management information file after consolidation and video data file after consolidation, wherein the conversion processing means converts directory file structure information in units of the recording media before consolidation to reproduction control information in a data format of the management information file for after consolidation so as to be recorded at the time of consolidation.

By the above described constitution, in addition to the conversion and consolidation operation of the management information file and the video data file, the data structure information in units of recording media of the portable device before consolidation is converted to the reproduction control information in the data format of the management information file for the stationary device to be recorded at the time of consolidation.

Further, a video data file consolidating method of the invention is a video data file consolidating method for consolidating plural data groups consisting of plural video data files and management information files including information associated therewith in units of the data groups to create a new video data file and management information file which are different from those of the data groups, wherein the plural data groups before consolidation are data groups recorded in a predetermined same data format and directory file structure, and the directory file structure information of the data groups before consolidation is converted to reproduction control information in the data format of the management information file after consolidation and is recorded in the management information file after consolidation.

According to the invention, the plural pieces of directory file structure information in units of recording media before consolidation are converted to reproduction control information in the data format of the management information file after consolidation and recorded in the management information file after consolidation, and thus it becomes possible to view and edit the video materials according to the management information before consolidation and further to write them in other media.

### BRIEF DESCRIPTION OF THE DRAWINGS

Fig. 1 shows an example of a directory file structure of video data files and management information files of a portable device according to the embodiment 1 of the invention;
Fig. 2 shows an example of a directory file structure of a video data file and management information file of a stationary device according to the embodiment 1 of the invention;
Fig. 3 is a block diagram of a consolidation video data file consolidating apparatus according to the embodiment 1 of the invention;
Fig. 4 is a conceptual diagram when video data files of the portable device are converted to the video data file of the stationary device according to the embodiment 1 of the invention;
Fig. 5 is a flowchart when the video data files of the portable device are converted to the video data file of the stationary device according to the embodiment 1 of the invention;
Fig. 6 is a flowchart when the video data file of the stationary device is converted to the video data files of the portable device according to the embodiment 1 of the invention;
Fig. 7 shows an example of data items and data of the reproduction control information in the stationary device according to the embodiment 1 of the invention;
Fig. 8 shows a relationship between a consolidation video data reproducing apparatus and peripheral devices according to the embodiment 2 of the invention;
Fig. 9 shows an example of data items and data of the reproduction control information in the stationary device according to the embodiment 3 of the invention, and
Fig. 10 is a conceptual diagram when video data files of the portable device are converted to a video data file of the stationary device in the conventional improved example.

### BEST MODE FOR CARRYING OUT THE INVENTION

Hereinafter, the invention will be described in detail by shown embodiments, and the description of the same parts as in the conventional example will be omitted for simplicity.

### (Embodiment 1)

A directory file structure of a portable device in the embodiment 1 in which video data files and management information files are recorded itself is the same as in the first improved example, and a directory file structure of a stationary device in which video data files and management information files are recorded is also the same as in the first improved example.

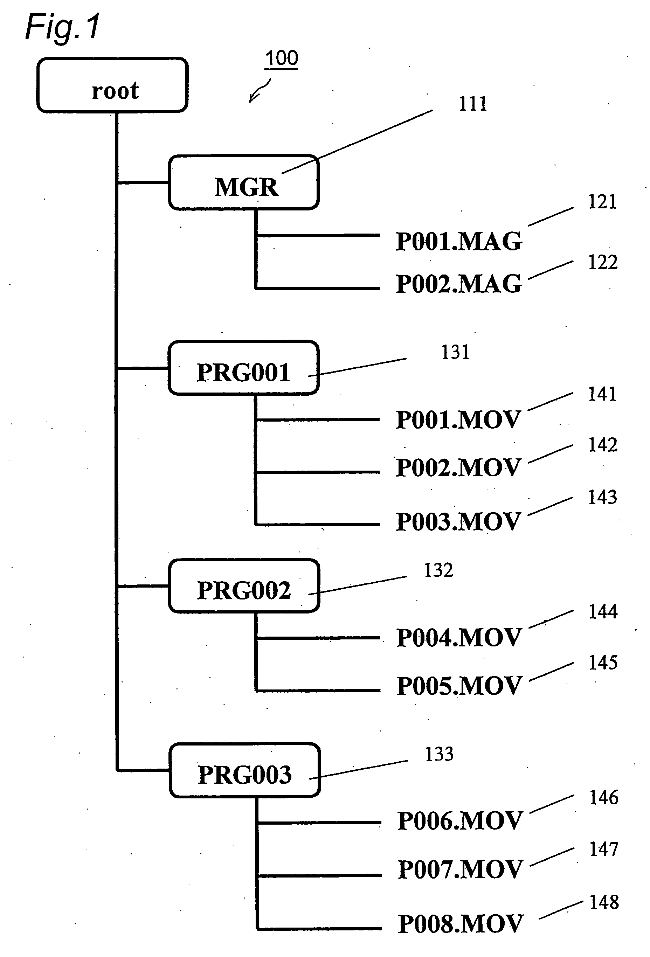

Fig. 1 shows an example of a directory file structure 100 of a portable device according to the embodiment 1 of the invention, in which video data files and management information files are recorded. In Fig. 1, 111 denotes a management information directory for recording the management information files, 121 and 122 denote a first management information file and a second management information file, respectively, recorded in the management information directory 111, and the first management information file 121 and the second management information file 122 include different management information. 131, 132 and 133 denote video data directories for recording the video data files, 141 to 148 denote the video data files in the video data directories 131 to 133. Here, the first management information file 121, the second management information file 122 and the video data files 141 to 148 are recorded in a data format of the portable device.

As shown in Fig. 1, the directory file structure of the portable device has one management information directory 111 in which the management information files are recorded, and has plural video data directories 131, 132 and 133 in each of which plural video data files are recorded. In the management information directory 111, the first management information file 121 and the second management information file 122 are recorded, wherein the first management information file 121 includes management information related to the entire of a recording medium such as a title of the recording medium and representative screen information recorded therein, and on the other hand, the second management information file 122 includes management information related to the video data such as reproduction times and compression coding attributes of the video data files 141 to 148 recorded therein.

Further, in the video data directories 131, 132 and 133, the video data files 141 to 148 exist in a state of being divided with respect to each creation date, so that a user can perform reproduction, edit, etc. in units of programs as operation units within the recording medium in the data format for the portable device. Note that, regarding the directory file structure shown in Fig. 1, other data files and directories than those shown in Fig. 1 may exist simultaneously.

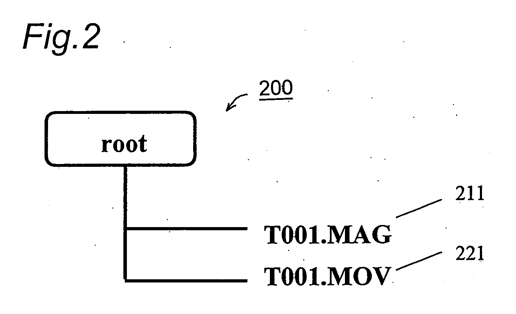

Fig. 2 shows an example of a directory file structure 200 of a stationary device in the embodiment 1 of the invention, in which video data files and management information files are recorded. In Fig. 2, 211 denotes a management information file and 221 denotes a video data file, and both of them are recorded in a data format for the stationary device. In the directory structure for the stationary device shown in Fig. 2, each of the management information and video data is put together in a single data file, and they exist in the same directory 200.

Therefore, in the case where the video data and the management information data associated therewith recorded in the directory file structure shown in Fig. 1 are converted to the directory file structure shown in Fig. 2, plural video data files and management information files existing in Fig. 1 are consolidated into single files, respectively, while being converted to the data format for the stationary device.

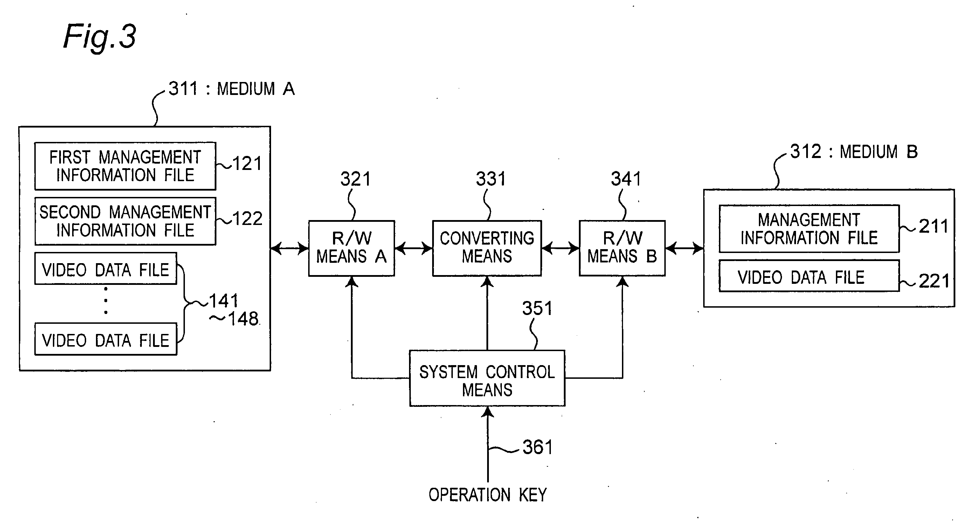

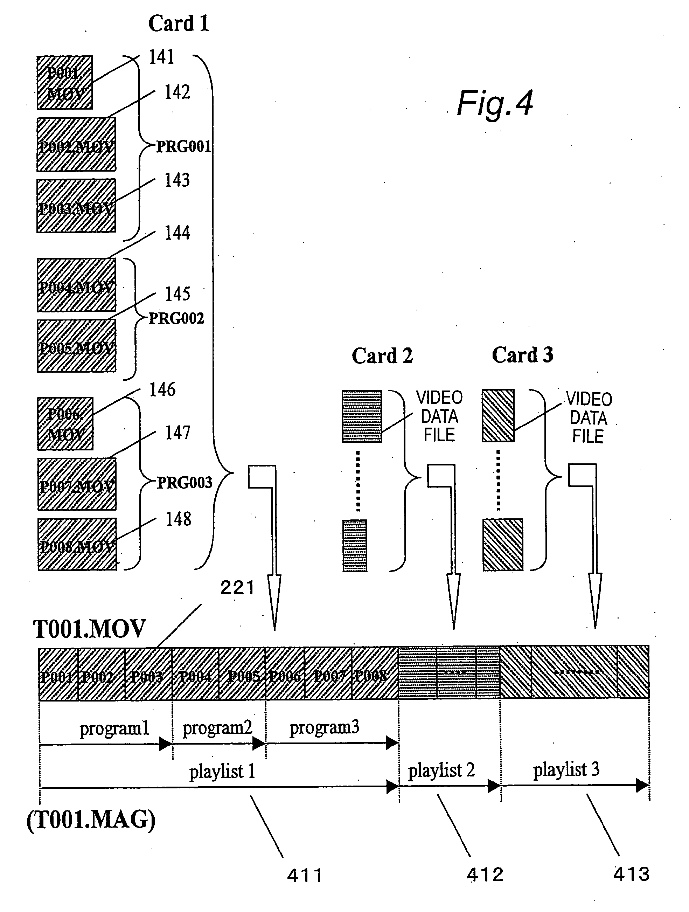

Fig. 3 is a block diagram for explanation of the constitution of an apparatus for realizing video data file consolidation in the embodiment 1. A medium A shown by 311 in Fig. 3 is a recording medium used for data recording in the portable device, for example, a recording medium in a memory card type having a flash memory built in. This corresponds to "Card 1'' shown in Fig. 4, which will be described later.

On the other hand, a medium B shown by 312 is a recording medium used for data recording in the stationary device, for example, a recording medium in a rewritable disk type such as a DVD (Digital Versatile Disc)-RAM disk. In the medium A311, the management information files 121 and 122 and the video data files 141 to 148 shown in Fig. 1 are recorded in the directory structure 100 shown in Fig. 1. Further, in the medium B312, the management information file 211 and the video data file 221 shown in Fig. 2 are recorded in the directory structure 200 shown in Fig. 2.

R/W means A shown by 321 is means for performing reading and writing of data on the medium A311, and has a function of supplying the data read from the medium A311 to converting means 331, or writing the data supplied from the converting means 331 in the medium A311. Similarly, R/W means B shown by 341 is means for performing reading and writing of data on the medium B312, and has a function of supplying the data read from the medium B312 to the converting means 331, or writing the data supplied from the converting means 331 in the medium B312.

The converting means 331 is means for converting various kinds of data recorded in the medium A311 in the portable device to the data format used in the stationary device or performing conversion processing inverse thereto, and the conversion processing is realized by a microcomputer and its built-in program, for example.

System control means 351 is means for controlling the R/W means A321 and the R/W means B341 to perform reading of data from the medium A311 and medium B312 and writing of data in the medium A311 and medium B312 according to the instructions input via an operation key 361 by a user of the device, and further, when the data is converted by the converting means 331, the system control means 351 is means for providing instructions to the converting means 311 based on the input of the operation key 361 as to whether the data used in the portable device is converted to the data format used in the stationary device or, inversely, the data used in the stationary device is converted to the data format used in the portable device.

When the user desires to convert the data recorded in the medium A311 or the medium B312 and the data is converted, the operation key 361 acts as interface means for performing designation as to whether the data used in the portable device is converted to the data format used in the stationary device or, inversely, the data used in the stationary device is converted to the data format used in the portable device, and the like and is comprised of instruction input means such as a button switch and touch panel, for example.

Fig. 4 is a conceptual diagram when the plural video data files 141 to 148 for the portable device in the embodiment 1 are consolidated into the video data file 221 for the stationary device, and simultaneously shows the relationship between reproduction control information and the video data file 221 in the data format for the stationary device.

In Fig. 4, 411, 412 and 413 denote reproduction control information defined within the management information file 211 as playlists in the data format for the stationary device.

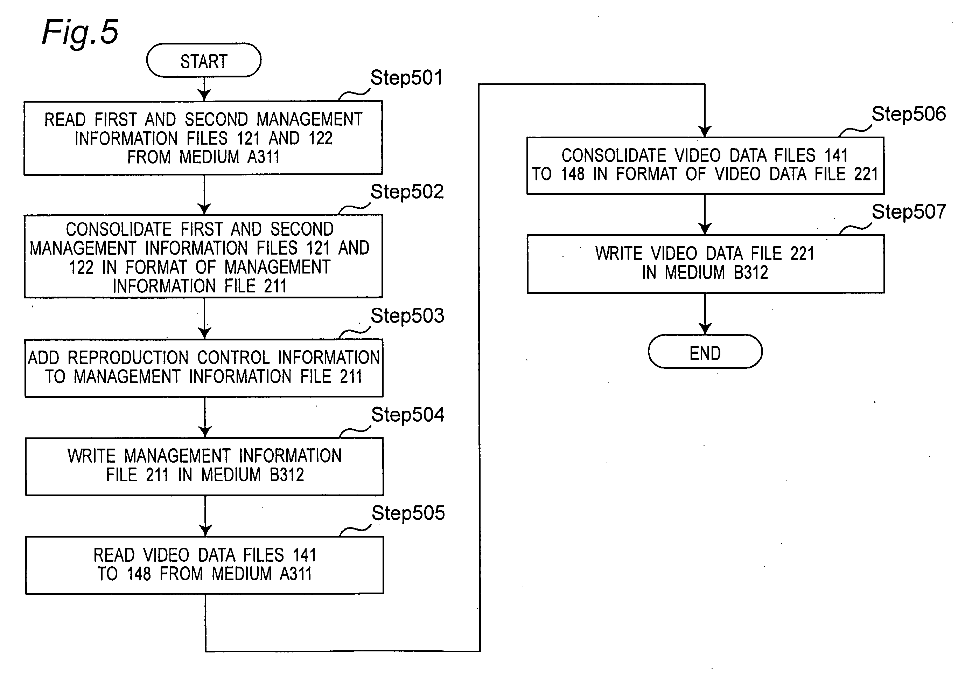

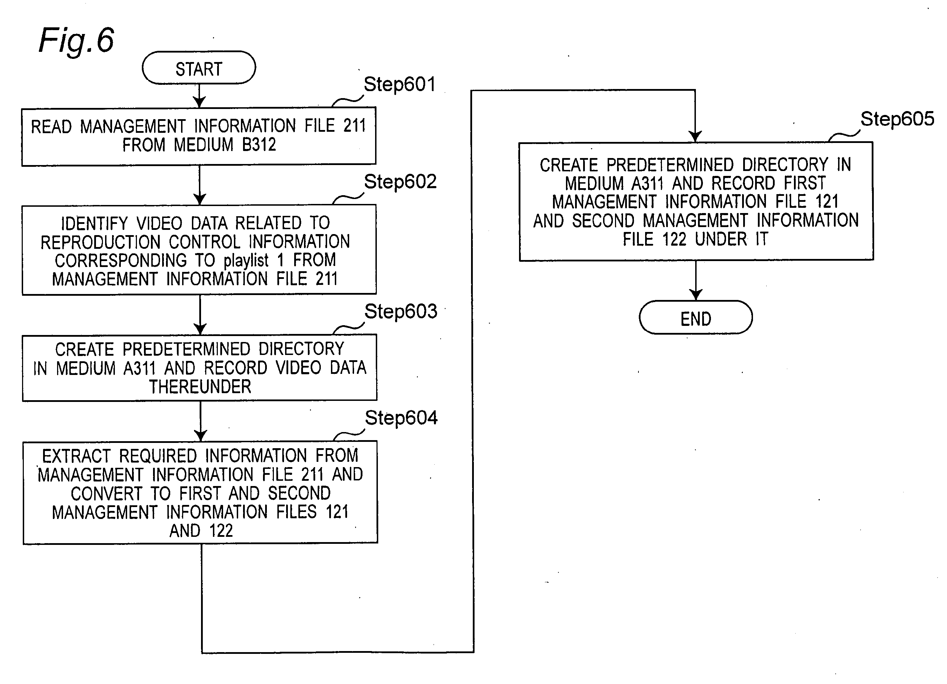

Figs. 5 and 6 are flowcharts for explanation of an operation of data conversion in the embodiment 1.

Hereinafter, the operation in the embodiment 1 will be described by referring to Figs. 1 to 6.

As shown in Fig. 1, the description will be made in the case where the first management information file 121, the second management information file 122 and the plural video data files 141 to 148 are distributed and recorded under the four directories 111 and 131 to 133, and these pieces of data are converted to be recorded in the medium B312.

First, the data conversion is started when the user operates the operation key 361 to provide instructions to convert the data recorded in the medium A311 for use in the portable device to the data format for use in the stationary device so as to record the data in the medium B312.

According to the instruction via the operation key 361, the system control means 351 first controls the R/W means A321 to read the first management information file 121 and second management information file 122 from the prescribed directory MGR111 shown in Fig. 1 of the medium A311 in order to start the conversion processing of data. This reading step is shown by step 501 in Fig. 5.

Then, the read two management information files 121 and 122 are converted to the format of the management information file 211 to be used in the stationary device. This converting step is shown by step 502 in Fig. 5.

Furthermore, information relating to the directory of the data groups and the file structure before data conversion is converted to reproduction control information corresponding to playlist 1 shown by 411 in Fig. 4 and is added to the management information file 211. This adding step is shown by step 503 in Fig. 5.

The management information file 211 added with the reproduction control information is recorded in the medium B312 via the R/W means B341. This writing step is shown by step 504 in Fig. 5. By the above described operation, the conversion of the two management information files recorded in the medium A311 is completed.

Subsequently, the conversion of video data files is performed first by sequentially reading the video data files 141 to 148 from the medium A311 as shown by the step 505 in Fig. 5. Then, the files are consolidated and converted to the format of the video data file 221 used in the stationary device as shown by the step 506 in Fig. 5. Furthermore, they are recorded in the medium B312 via the R/W means B341 as shown by the step 507 in Fig. 5.

As a result of the above described operation, as shown in Fig. 4, in the embodiment 1, the plural video data files on the recording medium of the portable device are consolidated into one.

Furthermore, the medium A311 is replaced with another medium A, and assuming it as a medium A313, for example, the medium A313 after replacement corresponds to "Card 2'' shown in Fig. 4. In the case where the data recorded in the medium A313 is consolidated and recorded in the medium B312, the management information file 211 and the video data file 221 that have already existed on the medium B312 are read via the R/W means B341, and in the converting means 331, the data of the medium A313 is converted by the same operation as described above and consolidated to the management information file 211 and the video data file 221, and then recorded in the medium B312. Simultaneously, the information relating to the directory of the data group and the file structure before data conversion is in turn converted to reproduction control information corresponding to the second playlist (playlist 2) shown by 412 in Fig. 4 and is added to the management information file 211.

Similarly, in the case where the data of yet another medium A (corresponding to "Card 3" in Fig. 1) is converted and consolidated into the medium B312, the data is converted to reproduction control information corresponding to the third playlist (playhst 3) shown by 413 in Fig. 4 and is added to the management information file 211. Thus, each time when the medium A is replaced, other information is additionally recorded in the management information file 211.

As described above, in the embodiment 1, in addition to the conversion and consolidation operation of the management information files and video data files, the data structure information in units of recording media of the portable device before consolidation is converted to the reproduction control information 411, 412 and 413 in the data format of the management information file for the stationary device and recorded at the time of consolidation.

In the above description, at the time of consolidation and recording, "information relating to the directory of the data groups and the file structure before data conversion" refers to MGR, PRG001, ..., PRG003 shown in Fig. 1, and that means the directory structure such as PRG001...PRG003 recorded in the data file format of the portable device and the arrangement (structure) of the video data groups existing under the directories. "Reproduction control information'' is information formed by replacing the directory file arrangement of the video data before consolidation with other information, and that means the programs (program 1, 2, 3) and playlists 411 to 413 (playlists 1 to 3). It is known from the program (program 1, 2, 3) information under which directory the video data groups before consolidation exist, and it is known from the playlist (playlists 1 to 3) information in which card the video data and the program exist.

Next, the inverse operation for converting the data recorded in the medium B312 to the data format of the portable device and writing back the data to the medium A311 will be described. First, the description will be provided by assuming the case where the data of "Card 1", "Card 2'' and "Card 3" has been recorded in the medium B312 by the above described data conversion and consolidation operation, and of the cards, the data corresponding to "Card 1'' is converted and written back to the medium A311.

First, the data conversion is started when the user operates the operation key 361 and provides instructions to convert the data (P001 to P008) associated with the reproduction control information corresponding to the playlist 1 of the data recorded in the medium B312 used in the stationary device to the data format to be used in the portable device so as to be recorded in the medium A311.

According to the instruction via the operation key 361, the system control means 351 first controls the R/W means B341 to read the management information file 211 shown in Fig. 2 from the medium B312 in order to start the conversion processing of data. This reading step is shown by step 601 in Fig. 6.

Then, the reproduction control information corresponding to the playlist 1 is interpret from the content of the management information file 211 and the video data related to the reproduction control information corresponding to the playlist 1 is identified. This step is shown by step 602 in Fig. 6. Here, the related video data is data from P001 to P008 in the video data file 221 shown in Fig. 4.

Next, the R/W means B341 reads the data from the P001 to P008 from the medium B312, creates predetermined directories (131 to 133) in the medium A311 based on the reproduction control information corresponding to the playlist 1, and the respective video data is recorded under them. This video data recording step is shown by step 603 in Fig. 6.

Then, the management information associated with the video data recorded in the medium A311 is extracted from the reproduction control information corresponding to the playlist 1, similarly, and the information is converted to the formats of the first management information file 121 and second management information file 122. The converting step is shown by step 604 in Fig. 6.

Further, the predetermined directory (111) is created in the medium A311 and two management information files, i.e., the first management information file 121 and second management information file 122 are recorded under the directory. The recording step is shown by step 605 in Fig. 6.

As a result of the above described operation, in the embodiment 1, the data on the recording medium of the stationary device can be written back to the recording medium of the portable device.

Here, the reproduction control information will be further described in detail.

The reproduction control information in the embodiment 1 includes plural pairs of reading starting position information and ending position information of a certain part in the video data file 221 according to an order of the reproduced parts at the time of video data reproduction for defining the parts of the video to be reproduced and the order thereof, and is defined as playlists in the data format of the stationary device and recorded within the management information file 211 (T001.MAG) shown in Fig. 2.

Therefore, when the first reproduction control information 411 in Fig. 4 is reproduced, of the video data of the entire video data file 221, first, the video data P001 in the part that has been recorded in the video data file 141 (P001.MOV) on the recording medium "Card 1" for the portable device before consolidation of the video data files is reproduced, then, similarly, the video data P002 in the part that has been recorded in the video data file 142 (P002.MOV) is reproduced, and subsequently, reproduction is sequentially performed until the video data P008 in the part that has been recorded in the video data file 148 (P008.MOV) is reproduced and ended. Accordingly, the user can independently reproduce only the video data (411 to 148) that has been recorded in the recording medium "Card 1" for the portable device before consolidation of the video data files, of the video data of the entire video data file 221, according to the reproduction control information 411.

Further, simultaneously, since the reproduction control information 411 complies the data format for the stationary device, the same reproduction operation is ensured in all of reproducing devices that can reproduce the data format.

In addition, in the embodiment 1, the reproduction control information 412 and 413 for reproducing the video data that has been recorded in "Card 2" and "Card 3" before consolidation as the above described reproduction control information are recorded within the management information file 211 (T001.MAG) as playlists (playlist 1, playlist 2). Therefore, the user can perform reproduction in the stationary device in units recorded in the recording media "Card 1'', "Card 2" and "Card 3" for the portable device by selecting the three playlists.

Furthermore, in Fig. 4, boundary information in units of programs on the recording media for the portable device is also displayed as program 1 to program 3. That is, in the embodiment 1, in the data format of the management information file for the stationary device, the program defined as a subordinate concept of the reproduction control information is adapted to the units of the program directories (131, 132, 133) in the data format of the portable device before consolidation. Since the video data files P001.MOV 141, P002.MOV 142 and P003.MOV 143 are included in the PRG001 directory 131 that has existed in the recording medium "Card 1" before consolidation, the program 1 is defined so as to be constituted by the video data (P001, P002, P003) that have been recorded in the above described three video data files in the program (program 1) in the data format of the stationary device and recorded in the management information file 211.

Thus, by recording the structure information of the program directories (131, 132, 133) in the data format of the stationary device in the management information file 211, the operation in units of programs (i.e., in units of program directories) on the recording media of the portable device before consolidation can be performed in addition to the operation in units of the recording media of the portable device.

Furthermore, also when writing back from the medium of the stationary device to the medium of the portable device, since the structure information of the program directories is recorded, the same directory file structure 100 as that before consolidation can be realized.

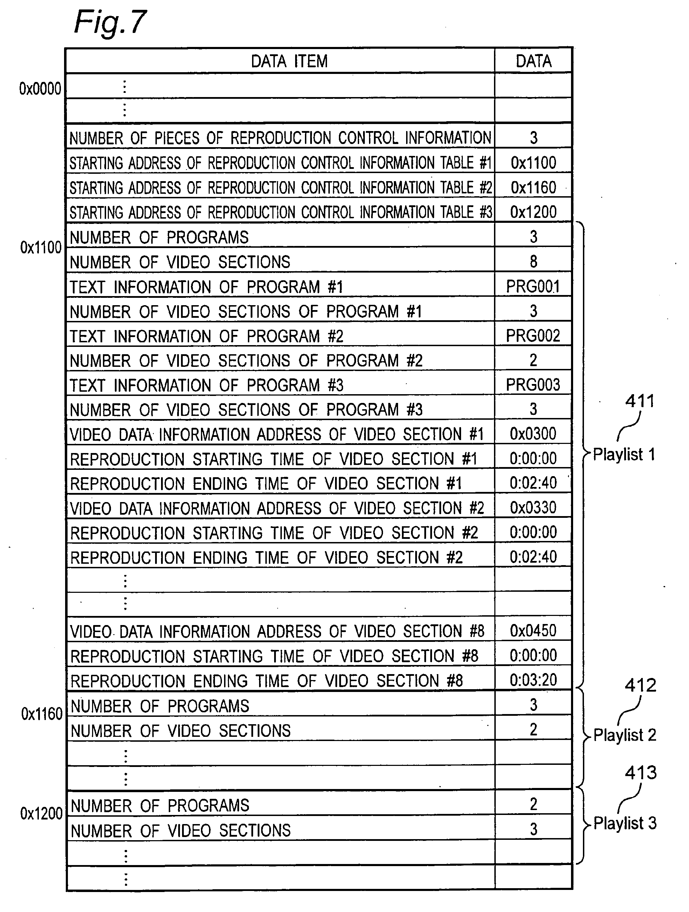

Next, using Fig. 7, a detailed example of the data format of the reproduction control information that enables the operation as described above will be described.

Fig. 7 shows only the part relating to the reproduction control information of the data format of the management information file 211 existing on the recording medium for the stationary device in the embodiment 1.

Note that, in the management information file 211, other than the reproduction control information described as below, additional information such as attribute information of a video stream necessary for the reproduction of the video data files, attribute information of voice and text data associated with the video data, reproduction time, representative screen information is included, however, the description of the display and operation of those data formats will be omitted because they do not directly relate to the operation of the invention.

In Fig. 7, the number of the pieces of reproduction control information is recorded in the first item of the reproduction control information. This information in-the embodiment 1 is the same number as the number of the consolidated recording media, and presented to the user of the portable device as the number of recorded playlists.

The format of the reproduction control information is repeatedly described by the number of the pieces of reproduction control information in a tabular form with respect to each playlist, and the starting address of each table is recorded as the number of bytes from the top of the file of the management information file 211.

Next, the part corresponding to the reproduction control information 411 will be described. First, the number of programs and the number of the video data files that have existed in the "Card 1" before consolidation are recorded as the number of programs and the number of video sections in the management information data format of the stationary device. In the embodiment 1, the video sections in the management information file data format of the stationary device are made correspond to the video data files for the portable device.

Note that, the video data files consolidated in the recording medium of the stationary device may be all of the video data files existing in the recording media of the portable device, or only the required part thereof, however, the number of video sections in the management information data file of the stationary device and the number of the consolidated video data files of the portable device are the same.

Subsequently, program directory names and the number of video data files before consolidation are recorded with respect to each program in the management information data format of the stationary device as the program text information and the number of program video sections. Further, in the program text information, file names of the video data files included in the program directories may be recorded in addition to the above described program directory names.

Thus, the directory names and the video data file names before consolidation have been recorded, and thereby, when writing back from the medium of the stationary device to the medium of the portable device again, the same program directory names and video data file names as those before consolidation can be restored.

Then, address information of areas in which attribute information required for reproduction of the video section corresponding to the video data file before consolidation is recorded with respect to each video data file that has existed in "Card 1'' and starting and ending time information of the video data file reproduction are described in a tabular form of several video data files. Here, note that the attribute information required for reproduction of the video section is recorded in another area of the management information file 211.

One piece of reproduction control information is completed by thus obtained data. Further, the reproduction control information described as above describes the operation for sequentially reproducing the video data that has existed in a certain recording medium before consolidation.

By recording the reproduction control information in units of recording media before consolidation in the data formats as described above, the operation in the embodiment 1 becomes enabled.

By the way, the explanation has been made in the case where the data format and the directory file structure on the recording medium of the portable device and those on the recording medium of the stationary device are different as above, however, the data formats and directory file structures of both of the devices may be the same as long as the reproduction control information equal to that in the above description can be recorded in the management information file.

### (Embodiment 2)

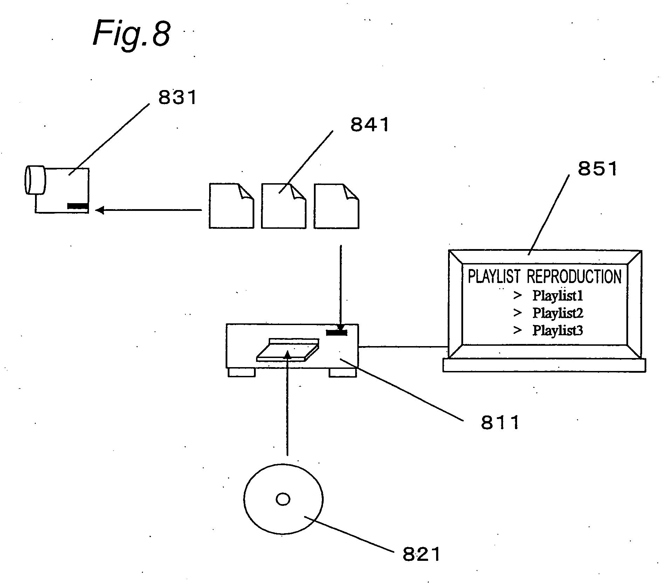

Next, using Fig. 8, the embodiment 2 of the invention will be described.

In Fig. 8, 811 denotes a consolidated video data file reproducing apparatus, 821 denotes a consolidated video data recording medium, 831 denotes a portable video recording device, 841 denotes a recording medium for the portable device, and 851 denotes a video display device.

In the embodiment 2, an apparatus for reproducing the consolidated video data created by the consolidating method described in the embodiment 1 will be described.

First, the consolidated video data file reproducing apparatus 811 includes an insertion hole for the recording medium for the portable device 841 as shown in Fig. 8, and has a recording and reproducing function for the recording medium for the portable device 841 as well as a recording and reproducing function for the consolidated video data recording medium 821.

Then, the video data shot by the portable video recording device 831 is recorded in the data format of the portable device in the recording medium for the portable device 841 according to the directory file structure shown in Fig. 8. The plural recording media for the portable device 841 are sequentially inserted into the consolidated video data file reproducing apparatus 811 and the recording operation to the consolidated video data recording medium 821 is started. Thus, by the consolidating method described in the embodiment 1, the consolidated video data is recorded in the consolidated video data recording medium 821 with the management information files including the reproduction control information.

When the reproduction of the consolidated video data recording medium 821 is started by the consolidated video data file reproducing apparatus 811, as described in the embodiment 1, since the data with respect to each of the plural recording media for the portable device is recorded as a playlist that is reproduction control information in the data format of the consolidated video data file reproducing apparatus 811, three playlists (playlist 1, playlist 2, playlist 3) are displayed on the video display device 851.

Therefore, by selecting an arbitrary playlist to be reproduced, the user can easily perform reproduction with respect to each recording medium for the portable device 841 before consolidation in the consolidated video data file reproducing apparatus 811.

Further, as described in the embodiment 1, since the data format recorded in the consolidated video data recording medium 821 complies the data format for recording and reproduction in the consolidated video data file reproducing apparatus 811, the same reproduction operation is ensured by a reproducing apparatus that can reproduce the data format.

Furthermore, when the user starts recording operation in the recording medium for the portable device 841 by selecting "playlist 1" displayed on the video display device 851, the directory file structure, the directory name and the file name of "Card 1" before consolidation are restored according to the operation described in the embodiment 1 in the consolidated video data file reproducing apparatus 811, and recorded in the recording medium 841 for the portable device.

When thus formed recording medium 841 for the portable device is inserted into the portable video recording device 831 and reproduction is started, reproduction operation equal to that before consolidation can be performed.

The consolidated video data file reproducing apparatus 811 in the embodiment 2 enables view and edit of the video materials according to the management information before consolidation, and further, rewriting them in other media by the above described operation so as to solve the conventional problem.

### (Embodiment 3)

Next, the embodiment 3 of the invention will be described.

In the embodiment 1, the description is made in the case where the data recorded in the portable device is converted in the condition in which the data recorded in the stationary device is not recorded in the recording medium and is recorded in the recording medium of the stationary device. However, in the case where the data recorded in the stationary device has already existed in the recording medium of the stationary device and reproduction control information for the data has already existed, when the data recorded in the portable device is converted and recorded in the recording medium of the stationary device, the formerly existing reproduction control information and newly added reproduction control information are mixed within the management information file 211. Then, it becomes difficult for the user to discriminate which reproduction control information of plural pieces of reproduction control information corresponds to the data on the recording medium of the portable device when the user puts the data that has been moved from the recording medium of the portable device to the recording medium of the stationary device back again into the recording medium of the portable device.

Accordingly, in the embodiment 3, there is proposed a constitution in which title information corresponding to each reproduction control information is defined in the management information file 211. Further, different titles are provided to the reproduction control information defined for the data that has been formerly recorded in the stationary device and the reproduction control information defined for the data recorded in the portable device, and thus, the user can easily discriminate both information.

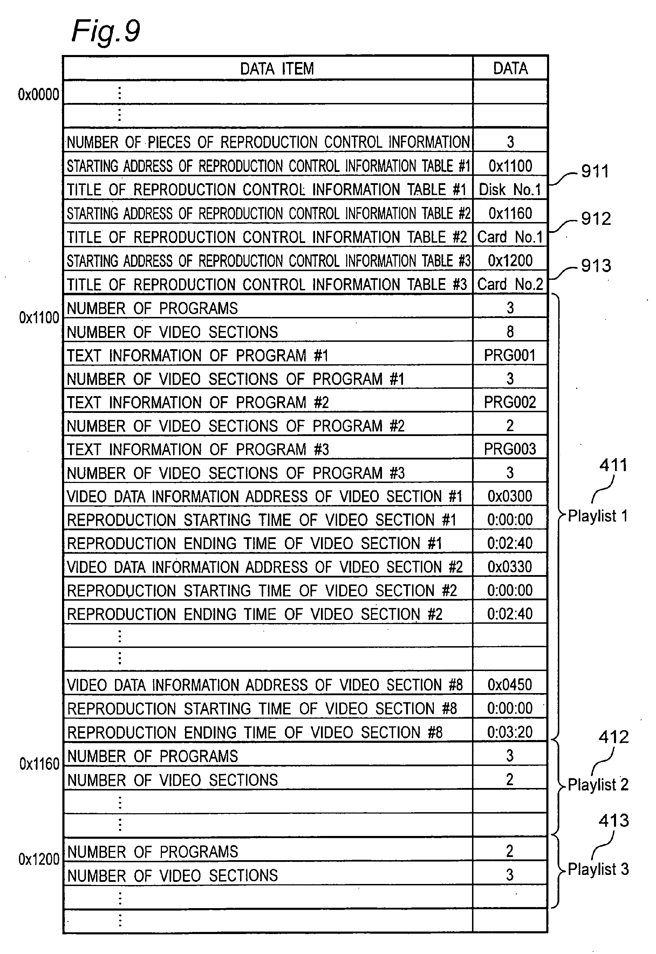

Fig. 9 shows only a part relating to reproduction control information in the data format of the management information file 211 existing on the recording medium for the stationary device, and the part has a structure in which areas 911, 912 and 913 for storing title information of the reproduction control information are added compared to that in Fig. 7.

Here, the reproduction control information corresponding to the playlist 1 is reproduction control information that has been defined for the data recorded in the stationary device, and the reproduction control information corresponding to the playlists 2 and 3 is reproduction control information defined when being consolidated in the data that has existed in the medium B312. At this time, another naming method than that for the reproduction control information generated by the stationary device for the recorded data of itself is adopted in the case where the reproduction control information is recorded in the stationary device, that is, for example, for the title of the reproduction control information corresponding to the playlist 1 named as "Disk No. 1'' and for the titles of the reproduction control information for the generated reproduction control information as a result that the data recorded in the portable device is consolidated, i.e., the reproduction control information corresponding to the playlists 2 and 3 named as "Card No. 1" and "Card No. 2". Thus, by changing the naming method for the reproduction control information and making the display on the video display device 851 described in the embodiment 2 into the title of the reproduction control information, the user can easily discriminate the reproduction control information defined for the data that has been recorded in the stationary device from the reproduction control information defined for the data that has been recorded in the portable device, and thereby improving the convenience for the user.

Note that, in the embodiment 3, the example has been described in which the title information corresponding to each reproduction control information is defined in the management information file 211 for discrimination of the reproduction control information, however, not limited to that, for example, a method for discrimination by providing flag bits for discrimination is conceivable.

Further, in all of the embodiments, the recording medium used for data recording in the portable device has been described as a recording medium in a memory card type with a flash memory built-in, for example, however, the medium is not limited to that. Similarly, the recording medium used for data recording in the stationary device has been described as a rewritable recording medium in a disk type such as a DVD (Digital Versatile Disc)-RAM disk, for example, however, the medium is not limited to that. It goes without saying that the invention is effective regardless of the recording medium.

According to the invention, by converting the plural pieces of directory file structure information in units of recording media before consolidation into reproduction control information in the data format of the management information file after consolidation and recording the information in the management information file after consolidation, it becomes possible to view and edit the video materials, and further, rewrite them in other media according to the management information before consolidation.

It goes without saying that the invention is not limited to the above described respective embodiments, and various changes and additions can be made within the range expressed in claims.

## Claims

1. A video data file consolidating apparatus for converting and consolidating video data files and management information data files associated therewith before consolidation which are recorded in a data format of a directory file structure before consolidation in a first recording medium, into a data format of a different directory file structure for a second recording medium, said apparatus comprising
conversion processing means for converting said management information files before consolidation and video data files before consolidation to said management information file after consolidation and video data file after consolidation,
wherein said conversion processing means converts directory file structure information in units of the recording media before consolidation to reproduction control information in a data format of said management information file for after consolidation so as to be recorded at the time of consolidation.

2. A video data file consolidating apparatus for converting and consolidating video data files and management information data files associated therewith before consolidation which are recorded in a data format of a directory file structure before consolidation, into a data format of a different directory file structure, said apparatus comprising:
a recording medium for before consolidation for recording said video data files before consolidation and management information data files associated therewith;
a recording medium for after consolidation for recording said video data file after consolidation and management information data file associated therewith;
first reading/writing means for reading and writing data on said recording medium for before consolidation;
second reading/writing means for reading and writing data on said recording medium for after consolidation; and
conversion control means for controlling conversion of the data recorded in said recording medium for before consolidation to a data format to be used in said recording medium for after consolidation, or controlling conversion inverse thereto,
wherein said conversion control means performs conversion processing of said management information files before consolidation to said management information file after consolidation, and performs conversion processing of said video data files before consolidation to said video data file after consolidation, and when consolidating into said management information file and video data file after consolidation to be recorded in the data format used in said recording medium for after consolidation, said conversion control means converts information relating to a directory and file structure of a data group before the data conversion to the reproduction control information which is additionally recorded in said management information file after consolidation.

3. A video data file consolidating method for consolidating plural data groups consisting of at least one video data file and at least one management information file including information associated therewith in units of the data groups to create new video data file and management information file different from those of the data groups, wherein said plural data groups before consolidation are data groups recorded in a predetermined same data format and directory file structure, and the directory file structure information of the data groups before consolidation is converted to reproduction control information in the data format of the management information file after consolidation and is recorded in the management information file after consolidation.

4. The video data file consolidating method according to claim 3, wherein both or one of file name information and directory name information of the data file in the directory file structure before consolidation is converted to text information in the data format of the management information file after consolidation to be recorded.

5. The video data file consolidating method according to claim 3, wherein the reproduction control information has identification information for identifying the reproduction control information and changes the identification information when the directory file structure information of the data groups before consolidation is converted to the reproduction control information in the data format of the management information file after consolidation.

6. The video data file consolidating method according to claim 5, wherein the identification information is text information provided to the reproduction control information.

7. The video data file consolidating method according to claim 5, wherein the identification information is flag information provided to the reproduction control information.

8. A consolidated video data file reproducing apparatus for reproducing a new video data file different from data groups created by consolidating plural data groups consisting of at least one video data file and at least one management information file including information associated therewith in units of the data groups, wherein said plural data groups before consolidation are data groups recorded in a predetermined same data format and directory file structure, and the directory file structure information of the data groups before consolidation is converted to reproduction control information in a data format of the management information file after consolidation to be recorded in the management information file after consolidation, and wherein said video data file after consolidation is reproduced by utilizing the reproduction control information.

9. The consolidated video data file reproducing apparatus according to claim 8, wherein both or one of file name information and directory name information of the data file in the directory file structure before consolidation are converted into text information in the data format of the management information file after consolidation and is recorded, and the recorded information is reproduced.

10. A consolidated video.data file reproducing method for reproducing a new video data file different from data groups created by consolidating plural data groups consisting of at least one video data file and at least one management information file including information associated therewith in units of the data groups, wherein said plural data groups before consolidation are data groups recorded in a predetermined same data format and directory file structure, and the directory file structure information of the data groups before consolidation is converted to reproduction control information in a data format of the management information file after consolidation to be recorded in said management information file after consolidation, and wherein said video data file after consolidation is reproduced by utilizing the reproduction control information.

11. The consolidated video data file reproducing method according to claim 10, wherein both or one of file name information and directory name information of the data file in the directory file structure before consolidation are converted to text information in the data format of the management information file after consolidation and is recorded, and the recorded information is reproduced.
